# EUROPÄISCHE PATENTSCHRIFT

(11) **EP 4 021 732 B1**
(45) Veröffentlichungstag und Bekanntmachung des Hinweises auf die Patenterteilung: **02.10.2024**
(21) Anmeldenummer: 20756744.7
(22) Anmeldetag: 03.08.2020
(51) Int. Cl.: B41J 11/00, B41J 3/407, B41J 13/08, B65G 15/58

(54) **VORRICHTUNG ZUM DIGITALEN BEDRUCKEN EINER PROFILLEISTE**
DEVICE FOR DIGITALLY PRINTING A PROFILED STRIP
DISPOSITIF D'IMPRESSION NUMÉRIQUE D'UNE BANDE PROFILÉE

(30) Priorität: 30.08.2019 AT 507602019
(43) Veröffentlichungstag der Anmeldung: 06.07.2022
(73) Patentinhaber: Neuhofer, Franz, 4893 Zell am Moos (AT)
(72) Erfinder: Neuhofer, Franz, 4893 Zell am Moos (AT)
(74) Vertreter: Hübscher & Partner Patentanwälte GmbH
(86) Internationale Anmeldenummer: PCT/AT2020/060286
(87) Internationale Veröffentlichungsnummer: WO 2021/035261

(56) Entgegenhaltungen:
- DE-A1- 102011 106 135
- DE-A1- 102015 203 424

## Beschreibung

### Technisches Gebiet

Die Erfindung bezieht sich auf eine Vorrichtung zum digitalen Bedrucken einer Profilleiste mit mehreren digitalen Druckköpfen, die gegenüber einem die Profilleiste in Längsrichtung an den Druckköpfen vorbeifördernden Förderer ausrichtbar sind.

### Stand der Technik

Um eine Profilleiste in weitgehender Übereinstimmung mit einer Druckvorlage digital in einer hohen Druckqualität bedrucken zu können, ist es nicht nur notwendig, die einzelnen Druckköpfe voneinander unabhängig gegenüber der Profilleiste auszurichten und hinsichtlich des für das Druckbild maßgebenden Ausstoßes der Tintentröpfchen aus den Düsen der Druckköpfe anzusteuern, sondern auch erforderlich, für eine genaue relative Bewegung der Druckköpfe gegenüber der Profilleiste in deren Längsrichtung zu sorgen. Zu diesem Zweck ist es bekannt (EP 2 868 478 A1), die Profilleiste mithilfe von Spannmitteln an einem starren Träger festzuklemmen, damit der gerade Verlauf der Profilleiste während des Bedruckens sichergestellt werden kann, und zwar unabhängig davon, ob der Träger mit der aufgespannten Profilleiste gegenüber den während des Druckens festgehaltenen Druckköpfen oder die Druckköpfe gegenüber dem festgehaltenen Träger in Längsrichtung der Profilleiste verfahren werden. Das Aufspannen der zu bedruckenden Profilleiste auf einem Träger gewährleistet zwar einen geraden Verlauf der Profilleiste, ist jedoch mit einem erheblichen Konstruktions- und Handhabungsaufwand verbunden. DE 10 2011 106135 A1 offenbart (siehe Abs. 27-35 sowie Fig. 1-6) eine Vorrichtung (14) geeignet zum digitalen Bedrucken einer Profilleiste mit mehreren digitalen Druckköpfen (15), die einen Förderer aufweist, wobei die Umlaufbahn eine Förderstrecke mit einem gerade verlaufenden Führungsabschnitt für die Förderglieder bildet und wobei die Förderglieder mit einer die Profilleiste während der Gliederbewegung entlang des geraden Führungsabschnitts verschiebefest haltenden Aufnahme für die Profilleiste versehen sind.

Um diesen Aufwand zu vermeiden, werden die zu bedruckenden Profilleisten mithilfe eines Förderers an den ausgerichteten Druckköpfen vorbeigeführt, wobei Seitenführungen ein Verlaufen der Profilleiste auf dem Förderer und Andrückrollen ein Abheben der Profilleiste vom Förderer verhindern sollen. Es hat sich jedoch herausgestellt, dass diese Maßnahmen zur Sicherung eines genauen, ausgerichteten Verlaufs der Profilleiste nicht ausreichen, insbesondere wenn die Profilleiste aus Holz gefertigt ist.

### Darstellung der Erfindung

Der Erfindung liegt das Problem zugrunde, dass zum digitalen Bedrucken von Profilleisten der Ort, an dem die Tintentröpfchen gemäß einem vorgegebenen Druckbild auf die Profilleiste mithilfe der Druckköpfe aufgebracht werden müssen, in einem engen Toleranzbereich vorgegeben werden muss. Dies bedeutet, dass nicht nur die Druckköpfe genau gegenüber den Profilleisten auszurichten sind, sondern auch die Profilleisten gerade ausgerichtet gegenüber den Druckköpfen gefördert werden müssen, um nicht die Druckköpfe entsprechend allfälliger Abweichungen der Profilleisten von einem geraden Verlauf nachführen zu müssen. Mit solchen Abweichungen der Profilleisten von einem geraden Verlauf ist jedoch bei Holzleisten stets zu rechnen.

Um dieses Problem zu lösen, sind nach der Erfindung zwei Maßnahmen zwingend erforderlich. Die Profilleisten müssen gerade ausgerichtet und in der ausgerichteten Lage an den Druckköpfen vorbeigefördert werden. Zu diesem Zweck ist eine Richteinrichtung vorgesehen, die einen Richtanschlag für eine Längsseite der Profilleiste und einen Stelltrieb aufweist, mit dessen Hilfe die Profilleiste unter einem Ausgleich von Abweichungen gegenüber dem geforderten geraden Verlauf an den Richtanschlag angedrückt und in dieser Ausrichtlage bis zur schubfesten Übernahme durch den Förderer festgehalten wird.

Besonders vorteilhafte Konstruktionsverhältnisse ergeben sich in diesem Zusammenhang, wenn der Richtanschlag entlang eines Übernahmebereichs des geraden Führungsabschnitts des Förderers verläuft und wenn auslaufseitig des Übernahmebereichs eine den Fördergliedern in Bezug auf die Profilleiste gegenüberliegende Einrichtung zum Andrücken der Profilleist an die Aufnahmen der Förderglieder vorgesehen ist. In diesem Fall wird mit vergleichsweise einfachen konstruktiven Mitteln sichergestellt, dass die Profilleiste in einem ausgerichteten, geraden Verlauf spielfrei in den Aufnahmen der Förderglieder für das nachfolgende Bedrucken festgehalten werden kann.

Ist der Übernahmebereich des geraden Führungsabschnitts auf der dem Richtanschlag gegenüberliegenden Seite an einen Querförderer für die zu bedruckenden Profilleisten angeschlossen, so können die mittels des Querförderers angeförderten Profilleisten nacheinander an den Richtanschlag angedrückt und in Längsrichtung hintereinander vom Förderer übernommen werden.

Als Richtanschlag können Laufbänder oder Gleitschienen eingesetzt werden. In analoger Weise kann der dem Richtanschlag zugeordnete Stelltrieb ein Laufband oder eine Gleitschiene aufweisen, wenn nicht einzelne Druckkörper an die Profilleiste angestellt werden.

### Kurze Beschreibung der Erfindung

In der Zeichnung ist der Erfindungsgegenstand beispielsweise dargestellt. Es zeigen
- Fig. 1: eine erfindungsgemäße Vorrichtung zum digitalen Bedrucken einer Profilleiste in einer schematischen Seitenansicht,
- Fig. 2: diese Vorrichtung im Übernahmebereich in einer Draufsicht in einem größeren Maßstab,
- Fig. 3: eine Ausführungsvariante einer erfindungsgemäßen Vorrichtung in einer schematischen Seitenansicht im Übernahmebereich in einem größeren Maßstab,
- Fig. 4: die Vorrichtung gemäß Fig. 3 in einer Draufsicht und die
- Fig. 5 und 6: eine weitere Ausführungsform einer erfindungsgemäßen Vorrichtung in einer den Fig. 3 und 4 entsprechenden Darstellung.

### Wege zur Ausführung der Erfindung

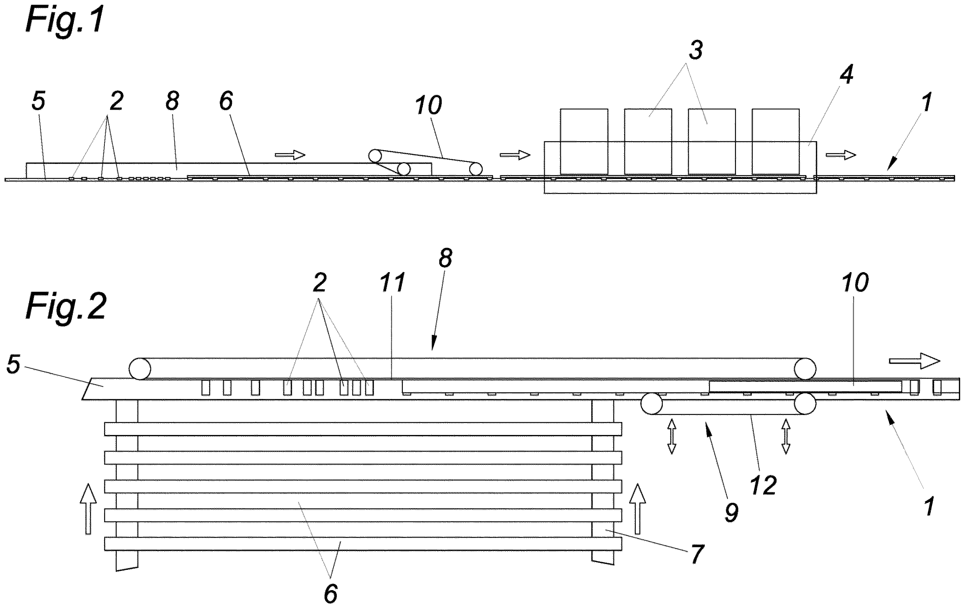

Die Vorrichtung zum digitalen Bedrucken einer Profilleiste weist gemäß den Fig. 1 und 2 einen Förderer 1 auf, der in einer Umlaufbahn geführte Förderglieder 2 aufweist, die die zu bedruckende Profilleisten in Aufnahmen schubfest aufnehmen. Diese Aufnahmen können mit gegen die Profilleisten vorstehenden Dornen zur schubfesten Halterung versehen sein. Es ist aber auch möglich, die Aufnahmen mit Saughaltern oder mechanischen Greifern auszurüsten, um die Profilleisten verschiebefest mit den Fördergliedern 2 verbinden zu können. Die ausgerichteten Profilleisten werden in Längsrichtung entlang einer Förderstrecke an Druckköpfen 3 einer digitalen Druckeinrichtung 4 vorbeibewegt und dabei bedruckt. Die Druckköpfe 3 müssen zu diesem Zweck gegenüber dem Förderer 1 entsprechend ausgerichtet werden. Zur Geradführung der Profilleisten bildet die Förderstrecke des Förderers 1 einen gerade verlaufenden Führungsabschnitt 5 für die Förderglieder 2, sodass die ausgerichtet von den Fördergliedern 2 übernommenen Profilleisten in der übernommenen und durch die schubfeste Halterung in den Aufnahmen der Förderglieder 2 in ihrer Ausrichtung festgehaltenen Lage an den Druckköpfen 3 vorbei bewegt werden können.

Zur Ausrichtung der zu bedruckenden Profilleisten 6 ist gemäß der Fig. 2 ein Querförderer 7 vorgesehen, der in einem Übernahmebereich an den geraden Führungsabschnitt 5 des Förderers 1 anschließt. Auf der dem Querförderer 7 gegenüberliegenden Seite des geraden Führungsabschnitts 5 ist ein Richtanschlag 8 für eine Längsseite der Profilleisten 6 vorgesehen. Die mittels des Querförderers 7 im Übernahmebereich auf die Förderglieder 2 aufgeschobenen Profilleisten 6 werden mithilfe eines Stelltriebs 9 an den Richtanschlag 8 angedrückt und somit in Längsrichtung gegenüber dem Richtanschlag 8 ausgerichtet. In dieser ausgerichteten Lage wird jede Profilleiste 6 mittels einer Einrichtung 10 zum Andrücken der Profilleiste 6 an die Aufnahmen der Förderglieder 2 beaufschlagt, sodass beispielsweise beim Vorsehen von Dornen in den Aufnahmen die Förderleisten 6 auf diese Dornen mit der Wirkung aufgedrückt werden, dass die Profilleisten 6 formschlüssig durch die den hölzernen Wertstoff der Profilleisten 6 eindringenden Dorne gegenüber den Fördergliedern 2 gehalten werden. Die in dieser Art ausgerichtet über ihre Unterseite aufgespannten Profilleisten 6 können dann an den aufspannungsfreien Seiten bedruckt werden, bevor die Profilleisten 6 im Anschluss an die Druckeinrichtung 4 wieder von den Fördergliedern 2 gelöst werden.

Im Ausführungsbeispiel nach den Fig. 1 und 2 werden sowohl der Richtanschlag 8 als auch der Stelltrieb 9 durch ein Laufband 11 bzw. 12 gebildet, was eine Unterstützung der Förderung der Profilleisten 6 im Übernahmebereich der Förderstrecke des Förderers 1 mit sich bringt. In ähnlicher Weise kann auch die Einrichtung 10 zum Andrücken der Profilleisten 6 an die Förderglieder 2 ein Laufband aufweisen.

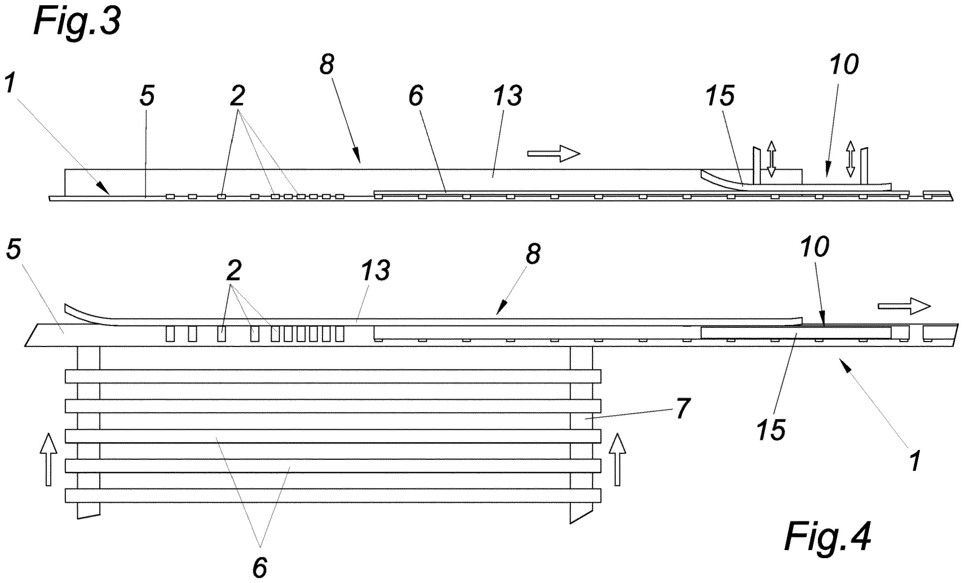

Zum Unterschied zur Ausbildung der Vorrichtung gemäß den Fig. 1 und 2 wird bei der Ausbildung nach den Fig. 3 und 4 der Richtanschlag 8 durch eine Gleitschiene 13 gebildet. Der Stelltrieb 9 zum Andrücken der Profilleisten6 an den Richtanschlag 8 ist in diesen Darstellungen aus Übersichtlichkeitsgründen weggelassen, kann aber ebenfalls eine Gleitschiene umfassen. Die Einrichtung 10 zum Andrücken der Profilleiste 6 an die Förderglieder 2 umfasst einen Druckschuh 15, mit dessen Hilfe die spielfreie Anlage der Profilleisten 6 an den Aufnahmen der Förderglieder 2 sichergestellt wird.

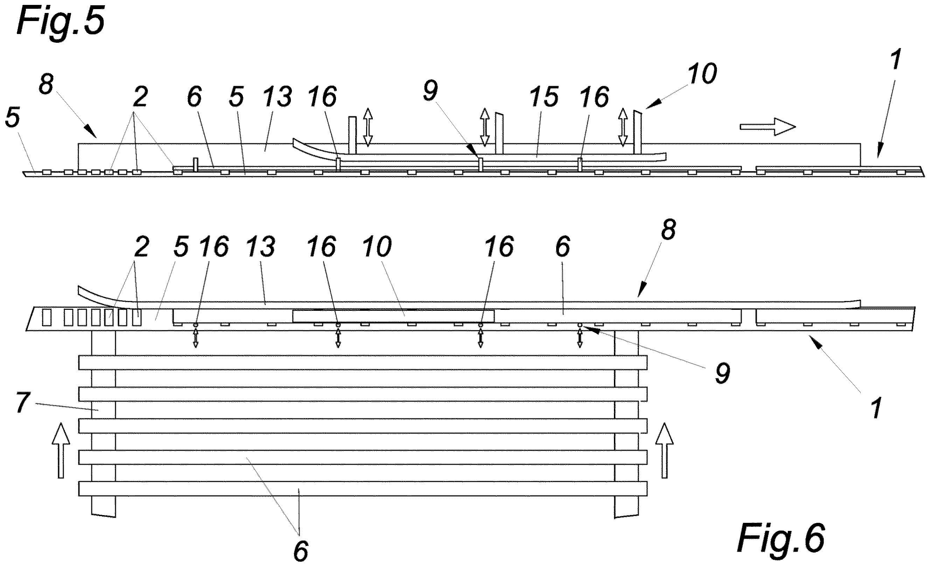

Eine weitere Ausführungsmöglichkeit einer erfindungsgemäßen Vorrichtung zum digitalen Bedrucken einer Profilleiste 6 ist in den Fig. 5 und 6 dargestellt. In diesem Ausführungsbeispiel wird der Richtanschlag 8 durch eine Gleitschiene 13 gebildet, während der Stelltrieb 9 aus einzelnen Druckkörpern 16 aufgebaut ist, die die Profilleiste 6 an die Gleitschiene 13 andrücken. Die Einrichtung 10 wird durch einen Druckschuh 15 gebildet, der im unmittelbarem Übernahmebereich des Förderers 1 angeordnet ist und vorzugsweise getaktet betrieben wird, um größere Andrückkräfte aufbringen zu können.

## Patentansprüche

1. Vorrichtung zum digitalen Bedrucken einer Profilleiste (6) mit mehreren digitalen Druckköpfen (3), die gegenüber einem die Profilleiste (6) in Längsrichtung an den Druckköpfen (3) vorbeifördernden Förderer (1) ausrichtbar sind, **dadurch gekennzeichnet, dass** dem Förderer (1) eine Richteinrichtung mit einem Richtanschlag (8) für eine Längsseite der Profilleiste (6) und mit einem Stelltrieb (9) zum Andrücken der Profilleiste (6) an den Richtanschlag (8) zugeordnet ist, dass der Förderer (1) eine Vielzahl von in einer Umlaufbahn geführten, über die Länge der Profilleiste (6) verteilte Abstützstellen ergebenden Fördergliedern (2) aufweist, dass die Umlaufbahn eine Förderstrecke mit einem gerade verlaufenden Führungsabschnitt (5) für die Förderglieder (2) bildet und dass die Förderglieder (2) mit einer die Profilleiste (6) während der Gliederbewegung entlang des geraden Führungsabschnitts (5) verschiebefest haltenden Aufnahme für die Profilleiste (6) in ihrer am Richtanschlag (8) festgehaltenen Ausrichtlage versehen sind.

2. Vorrichtung nach Anspruch 1, **dadurch gekennzeichnet, dass** der für eine maximale Länge der Profilleiste (6) ausgelegte Förderer (1) einen geraden Führungsabschnitt (5) mit einer zumindest der doppelten Auslegungslänge für die Profilleiste (6) entsprechenden Länge aufweist.

3. Vorrichtung nach Anspruch 1 oder 2, **dadurch gekennzeichnet, dass** die Aufnahmen der Förderglieder (2) für die Profilleiste (6) mit gegen die Profilleiste (6) vorstehenden Dornen versehen sind.

4. Vorrichtung nach Anspruch 1 oder 2, **dadurch gekennzeichnet, dass** die Aufnahmen der Förderglieder (2) für die Profilleiste (6) mit Saughaltern versehen sind.

5. Vorrichtung nach Anspruch 1 oder 2, **dadurch gekennzeichnet, dass** die Aufnahmen der Förderglieder (2) für die Profilleiste (6) mit Greifern versehen sind.

6. Vorrichtung nach einem der Ansprüche 1 bis 5, **dadurch gekennzeichnet, dass** der Richtanschlag (8) entlang eines Übernahmebereichs des geraden Führungsabschnitts (5) verläuft und dass auslaufseitig des Übernahmebereichs eine den Fördergliedern (2) in Bezug auf die Profilleiste (6) gegenüberliegende Einrichtung (10) zum Andrücken der Profilleiste (6) an die Aufnahmen der Förderglieder (2) vorgesehen ist.

7. Vorrichtung nach Anspruch 6, **dadurch gekennzeichnet, dass** der Übernahmebereich des geraden Führungsabschnitts (5) auf der dem Richtanschlag (8) gegenüberliegenden Seite an einen Querförderer (7) für die zu bedruckenden Profilleisten (6) angeschlossen ist.

8. Vorrichtung nach Anspruch 6 oder 7, **dadurch gekennzeichnet, dass** der Richtanschlag (8) und/oder der ihm zugeordnete Stelltrieb (9) ein Laufband (11, 12) aufweist.

9. Vorrichtung nach Anspruch 6 oder 7, **dadurch gekennzeichnet, dass** der Richtanschlag (8) und/oder der ihm zugeordnete Stelltrieb (9) eine Gleitschiene (13,) aufweist.

## Claims

1. Device for digitally printing a profiled strip (6), comprising a plurality of digital print heads (3) which can be oriented relative to a conveyor (1) conveying the profiled strip (6) past the print heads (3) in the longitudinal direction, **characterized in that** the conveyor (1) is associated with an alignment device having an alignment stop (8) for a longitudinal side of the profiled strip (6) and having an actuator (9) for pressing the profiled strip (6) against the alignment stop (8), **in that** the conveyor (1) has a plurality of conveying members (2) guided in a circulating path and forming support points distributed over the length of the profiled strip (6), **in that** the circulation path forms a conveying section with a straight guiding section (5) for the conveying members (2), and **in that** the conveying members (2) are provided with a receptacle for the profiled strip (6), which holds the profiled strip (6) in its alignment position, in which the profiled strip (6) is fixed at the alignment stop (8), in a manner fixed against displacement during the movement of the members along the straight guiding section (5).

2. Device according to claim 1, **characterized in that** the conveyor (1) designed for a maximum length of the profiled strip (6) has a straight guiding section (5) with a length corresponding to at least twice the design length for the profiled strip (6).

3. Device according to claim 1 or 2, **characterized in that** the receptacles of the conveying members (2) for the profiled strip (6) are provided with spikes projecting against the profiled strip (6).

4. Device according to claim 1 or 2, **characterized in that** the receptacles of the conveying members (2) for the profiled strip (6) are provided with suction holders.

5. Device according to claim 1 or 2, **characterized in that** the receptacles of the conveying members (2) for the profiled strip (6) are provided with grippers.

6. Device according to one of the claims 1 to 5, **characterized in that** the alignment stop (8) extends along a takeover area of the straight guiding section (5), and **in that**, on the outlet side of the takeover area, a device (10) opposite the conveying members (2) with respect to the profiled strip (6) is provided for pressing the profiled strip (6) against the receptacles of the conveying members (2).

7. Device according to claim 6, **characterized in that** the takeover area of the straight guiding section (5) is connected on the side opposite the alignment stop (8) to a cross conveyor (7) for the profiled strips (6) to be printed.

8. Device according to claim 6 or 7, **characterized in that** the alignment stop (8) and/or the actuator (9) associated therewith comprises a running belt (11, 12).

9. Device according to claim 6 or 7, **characterized in that** the alignment stop (8) and/or the actuator (9) associated therewith has a slide rail (13).

## Revendications

1. Dispositif pour l'impression numérique d'une baguette profilée (6), comportant plusieurs têtes d'impression numériques (3) qui peuvent être orientées par rapport à un convoyeur (1) transportant la baguette profilée (6) contre les têtes d'impression (3) dans la direction longitudinale, **caractérisé en ce qu'**au convoyeur (1) est associé un système d'alignement avec une butée d'alignement (8) pour un côté longitudinal de la baguette profilée (6) et avec un actionneur (9) pour appliquer la baguette profilée (6) contre la butée d'alignement (8), que le convoyeur (1) comporte une pluralité d'éléments de transport (2) guidés dans un circuit, offrant des points d'appui répartis sur la longueur de la baguette profilée (6), que le circuit forme un chemin de convoyage avec une section de guidage (5) rectiligne pour les éléments de transport (2) et que les éléments de transport (2) sont dotés d'un réceptacle maintenant la baguette profilée (6) en solidarité de déplacement pendant le déplacement des éléments le long de la section de guidage rectiligne (5), la baguette profilée (6) étant maintenue dans son orientation contre la butée d'alignement (8).

2. Dispositif selon la revendication 1, **caractérisé en ce que** le convoyeur (1) conçu pour une longueur maximale de la baguette profilée (6) comporte une section de guidage rectiligne (5) doté d'une longueur correspondant au moins au double de la longueur nominale de la baguette profilée (6).

3. Dispositif selon la revendication 1 ou 2, **caractérisé en ce que** les réceptacles des éléments de transport (2) sont dotés pour la baguette profilée (6) de pointes saillant contre la baguette profilée (6).

4. Dispositif selon la revendication 1 ou 2, **caractérisé en ce que** les réceptacles des éléments de transport (2) sont dotés de ventouses pour la baguette profilée (6).

5. Dispositif selon la revendication 1 ou 2, **caractérisé en ce que** les réceptacles des éléments de transport (2) sont dotés de pinces pour la baguette profilée (6).

6. Dispositif selon une des revendications 1 à 5, **caractérisé en ce que** la butée d'alignement (8) court le long d'une zone de transfert de la section de guidage rectiligne (5) et qu'un dispositif (10) opposé aux éléments de transport (2) par rapport à la baguette profilée (6) est prévu en aval de la zone de transfert pour presser la baguette profilée (6) contre les réceptacles des éléments de transport (2).

7. Dispositif selon la revendication 6, **caractérisé en ce que** la zone de transfert de la section de guidage rectiligne (5) du coté opposé à la butée d'alignement (8) est raccordée à un convoyeur transversal (7) pour les baguettes profilées (6) à imprimer.

8. Dispositif selon la revendication 6 ou 7, **caractérisé en ce que** la butée d'alignement (8) et/ou l'actionneur (9) associé à celle-ci comportent un tapis roulant (11, 12).

9. Dispositif selon la revendication 6 ou 7, **caractérisé en ce que** la butée d'alignement (8) et/ou l'actionneur (9) associé à celle-ci comportent une glissière (13).
